(19) Europäisches Patentamt
European Patent Office
Office européen des brevets

(11) **EP 4 564 755 A1**

(12) **EUROPEAN PATENT APPLICATION**
published in accordance with Art. 153(4) EPC

(43) Date of publication:
**04.06.2025 Bulletin 2025/23**

(21) Application number: **22952366.7**

(22) Date of filing: **27.07.2022**

(51) International Patent Classification (IPC):
**H04L 27/00** (2006.01)

(52) Cooperative Patent Classification (CPC):
**H04L 27/00**

(86) International application number:
**PCT/CN2022/108414**

(87) International publication number:
**WO 2024/020904 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **CHEN, Dong**
  **Beijing 100085 (CN)**
• **CHI, Liangang**
  **Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD FOR SENDING PHASE SHIFT CONFIGURATION OF INTELLIGENT REFLECTING SURFACE (IRS), METHOD FOR RECEIVING PHASE SHIFT CONFIGURATION OF IRS, AND APPARATUS**

(57)     A method for sending a phase shift configuration of an intelligent reflecting surface (IRS), a method for receiving a phase shift configuration of an IRS, and an apparatus, which can be applied to the technical field of communications. The method executed by a network device comprises: receiving a pilot signal sent by a terminal device; performing decorrelation processing on the pilot signal; inputting the decorrelated pilot signal into a first network model to obtain an initial reflection phase shift vector; inputting the initial reflection phase shift vector into a second network model to obtain a reflection phase shift vector to be configured, the scale of the reflection phase shift vector to be configured being smaller than that of the initial reflection phase shift vector; and sending the reflection phase shift vector to be configured to the IRS. Therefore, by reducing the scale of the reflection phase shift vector to be configured, the overhead and the loss of rate performance of configuring the reflection phase shift vector by the network device to the IRS are reduced.

FIG. 2

**Description**

## TECHNICAL FIELD

The disclosure relates to the field of communication technologies, in particular to a method for sending a phase shift configuration of an intelligent reflecting surface (IRS), a method for receiving a phase shift configuration of an IRS, and an apparatus.

## BACKGROUND

In the related art, an intelligent reflecting surface (IRS) is deployed on the surfaces of various objects in a wireless transmission environment, and an appropriate phase shift can be set according to channel information of the system, so as to realize dynamic adjustment of the communication environment.

In order to realize beamforming in the IRS-assisted communication system, a network device needs to calculate and configure a phase shift for the IRS. Currently, how to reduce the overhead of the phase shift configuration process for the IRS is a problem to be solved urgently.

## SUMMARY

The embodiments of the disclosure provide a method for sending a phase shift configuration of an intelligent reflecting surface (IRS), a method for receiving a phase shift configuration of an IRS, and a device, which reduces an overhead and a rate performance loss of a network device in configuring a reflection phase shift vector to the IRS by reducing a scale of the reflection phase shift vector to be configured.

According to a first aspect of embodiments of the disclosure, a method for sending a phase shift configuration of an IRS is provided. The method is performed by a network device, and includes: receiving a pilot signal sent by a terminal; performing a decorrelation processing on the pilot signal; obtaining an initial reflection phase shift vector by inputting a decorrelated pilot signal into a first network model; obtaining a reflection phase shift vector to be configured by inputting the initial reflection phase shift vector into a second network model, in which a scale of the reflection phase shift vector to be configured is smaller than a scale of the initial reflection phase shift vector; and sending the reflection phase shift vector to be configured to the IRS.

In the disclosure, after receiving the pilot signal sent by the terminal, the network device decorrelates the pilot signal and inputs the decorrelated pilot signal into the first network model to obtain the initial reflection phase shift vector. The network device inputs the initial reflection phase shift vector into the second network model to obtain the reflection phase shift vector to be configured with a smaller scale and sends the reflection phase shift vector to be configured to the IRS. Therefore, by reducing the scale of the reflection phase shift vector to be configured, the overhead and rate performance loss of the network device in configuring the reflection phase shift vector to the IRS are reduced.

According to a second aspect of embodiments of the disclosure, a method for receiving a phase shift configuration of an IRS is provided. The method is performed by an IRS, and includes: receiving a reflection phase shift vector to be configured sent by a network device; obtaining a reflection phase shift vector to be applied by inputting the reflection phase shift vector to be configured into a phase shift conversion model, in which a scale of the reflection phase shift vector to be applied is larger than a scale of the reflection phase shift vector to be configured; and determining a first reflection phase shift corresponding to each unit in the IRS based on the reflection phase shift vector to be applied.

In the disclosure, after receiving the reflection phase shift vector to be configured sent by the network device, the IRS may use a phase shift conversion model to convert the reflection phase shift vector to be configured into the reflection phase shift vector to be applied with a larger scale, and determine the first reflection phase shift corresponding to each unit according to the reflection phase shift vector to be applied. In this way, the network device configures the reflection phase shift vector with a smaller scale to the IRS, which reduces the overhead and rate performance loss of the network device in configuring the reflection phase shift vector to the IRS.

According to a third aspect of embodiments of the disclosure, a network device is provided. The network device includes:

a transceiver module, configured to receive a pilot signal sent by a terminal; and
a processing module, configured to perform a decorrelation processing on the pilot signal;
in which the processing module is further configured to obtain an initial reflection phase shift vector by inputting a decorrelated pilot signal into a first network model; and
the processing module is further configured to obtain a reflection phase shift vector to be configured by inputting the initial reflection phase shift vector into a second network model, in which a scale of the reflection phase shift vector to be configured is smaller than a scale of the initial reflection phase shift vector; and

the transceiver module is further configured to send the reflection phase shift vector to be configured to the IRS.

According to a fourth aspect of embodiments of the disclosure, an IRS is provided. The IRS includes:

a transceiver module, configured to receive a reflection phase shift vector to be configured sent by a network device; and
a processing module, configured to obtain a reflection phase shift vector to be applied by inputting the reflection phase shift vector to be configured into a phase shift conversion model, in which a scale of the reflection phase shift vector to be applied is larger than a scale of the reflection phase shift vector to be configured;
in which the processing module is further configured to determine a first reflection phase shift corresponding to each unit in the IRS based on the reflection phase shift vector to be applied.

According to a fifth aspect of embodiments of the disclosure, a communication apparatus is provided. The communication apparatus includes a processor, and when the processor calls computer programs stored in a memory, the method of the first aspect is implemented.

According to a sixth aspect of embodiments of the disclosure, a communication apparatus is provided. The communication apparatus includes a processor, and when the processor calls computer programs stored in a memory, the method of the second aspect is implemented.

According to a seventh aspect of embodiments of the disclosure, a communication apparatus is provided. The communication apparatus includes a processor and a memory having computer programs stored therein. When the processor executes the computer programs stored in the memory, the communication apparatus is caused to implement the method of the first aspect.

According to an eighth aspect of embodiments of the disclosure, a communication apparatus is provided. The communication apparatus includes a processor and a memory having computer programs stored therein. When the processor executes the computer programs stored in the memory, the communication apparatus is caused to implement the method of the second aspect.

According to a ninth aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the apparatus to implement the method described in the first aspect above.

According to a tenth aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the apparatus to implement the method described in the second aspect above.

According to an eleventh aspect of embodiments of the disclosure, a communication system is provided. The system includes the communication apparatus of the third aspect and the communication apparatus of the fourth aspect, or the system includes the communication apparatus of the fifth aspect and the communication apparatus of the sixth aspect, or the system includes the communication apparatus of the seventh aspect and the communication apparatus of the eighth aspect, or the system includes the communication apparatus of the ninth aspect and the communication apparatus of the tenth aspect.

According to a twelfth aspect of embodiments of the disclosure, a computer-readable storage medium is provided. The computer-readable storage medium is configured to store instructions used by the above terminal. When the instructions are executed, the terminal is caused to implement the method of the first aspect.

According to a thirteenth aspect of embodiments of the disclosure, a readable storage medium is provided. The readable storage medium is configured to store instructions used by the above network device. When the instructions are executed, the network device is caused to implement the method of the second aspect.

According to a fourteenth aspect of embodiments of the disclosure, a computer program product including computer programs is provided. When the computer programs are run by a computer, the computer is caused to implement the method of the first aspect.

According to a fifteenth aspect of embodiments of the disclosure, a computer program product including computer programs is provided. When the computer programs are run by a computer, the computer is caused to implement the method of the second aspect.

According to a sixteenth aspect of embodiments of the disclosure, a chip system is provided. The chip system includes at least one processor and an interface for supporting the network device in realizing the functions involved in the first aspect, e.g., determining or processing at least one of data or information involved in the method described above. In a possible design, the chip system further includes a memory. The memory is configured to store necessary computer programs and data for the terminal. The chip system may consist of chips or may include a chip and other discrete components.

According to a seventeenth aspect of embodiments of the disclosure, a chip system is provided. The chip system includes at least one processor and an interface for supporting the IRS in realizing the functions involved in the second aspect, e.g., determining or processing at least one of data or information involved in the method described above. In a possible design, the chip system further includes a memory. The memory is configured to store necessary computer programs and data for the network device. The chip system may consist of chips or may include a chip and other discrete components.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

## BRIEF DESCRIPTION OF THE DRAWINGS

In order to clearly illustrate technical solutions in the embodiments of the disclosure or background technologies, descriptions of drawings used in the embodiments of the disclosure or background technologies are given below.

FIG. 1 is a schematic diagram of a communication system according to an embodiment of the disclosure.
FIG. 2 is a flowchart of a method for sending a phase shift configuration of an intelligent reflecting surface (IRS) according to an embodiment of the disclosure.
FIG. 3 is a flowchart of a method for sending a phase shift configuration of an IRS according to another embodiment of the disclosure.
FIG. 4 is a flowchart of a method for sending a phase shift configuration of an IRS according to yet another embodiment of the disclosure.
FIG. 5 is a flowchart of a method for sending a phase shift configuration of an IRS according to further another embodiment of the disclosure.
FIG. 6 is a flowchart of a method for sending a phase shift configuration of an IRS according to further another embodiment of the disclosure.
FIG. 7 is a flowchart of a training method for a model for determining a reflection phase shift to be configured according to an embodiment of the disclosure.
FIG. 7a is a schematic diagram of a network model according to the disclosure.
FIG. 7b is a schematic diagram of a first network model.
FIG. 7c is a schematic diagram of a second network model.
FIG. 7d is a schematic diagram of a phase shift conversion model.
FIG. 7e is a schematic diagram of a transmission time slot of an IRS-assisted communication system.
FIG. 8 is a flowchart of a method for receiving a phase shift configuration of an IRS according to an embodiment of the disclosure.
FIG. 9 is a flowchart of a method for receiving a phase shift configuration of an IRS according to another embodiment of the disclosure.
FIG. 10 is a flowchart of a method for receiving a phase shift configuration of an IRS according to yet another embodiment of the disclosure.
FIG. 11 is a schematic diagram of a communication apparatus according to an embodiment of the disclosure.
FIG. 12 is a schematic diagram of another communication apparatus according to an embodiment of the disclosure.
FIG. 13 is a schematic diagram of a chip according to an embodiment of the disclosure.

## DETAILED DESCRIPTION

For easy of understanding, the terms involved in this disclosure are introduced first.

1. Intelligent reflecting surface (IRS)

IRS can also be referred to as intelligent reflection surface (IRS) or reconfigurable intelligence surface (RIS). Although the IRS appears to be a common thin plate, it may be flexibly deployed in a wireless communication propagation environment to manipulate frequency, phase, polarization and other characteristics of reflected or refracted electromagnetic waves, in order to reshape a wireless channel. In detail, the IRS may reflect the signal incident on its surface to a specific direction through the precoding technology to enhance the signal strength at the receiving end, thereby realizing channel control.

2. Pilot signal

The pilot signal, also known as reference signal, is a known signal provided by a transmitter to a receiver and is configured for channel estimation or channel detection. The pilot signal may be configured for coherent detection and demodulation, or beam measurement of a terminal or coherent detection and monitoring, or channel quality measurement of a network device, etc.

In order to better understand a method for sending a phase shift configuration of an IRS and a method for receiving a phase shift configuration of an IRS disclosed in the embodiments of the disclosure, a communication system applicable to the embodiment of the disclosure will be described below.

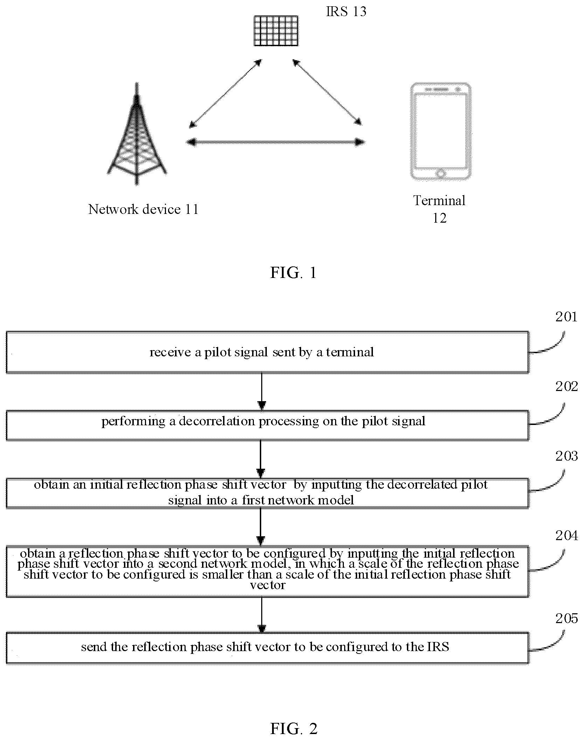

As illustrated in FIG. 1, FIG. 1 is a schematic diagram of a communication system provided by an embodiment of the disclosure. The communication system may include, but is not limited to, one network device, one IRS and one terminal. The number and form of devices illustrated in FIG. 1 are only for example and do not constitute a limitation on the embodiment of the disclosure, and two or more network devices, two or more intelligent relays and two or more terminals may be included in practical applications. The communication system illustrated in FIG. 1 includes, for example, a network device 11, a terminal 12 and an IRS 13.

It is noteworthy that the technical solution of embodiments of the disclosure may be applied to various communication systems, such as, a long term evolution (LTE) system, a 5th generation (5G) mobile communication system, a 5G new radio (NR) system, or other future new mobile communication systems.

The network device 11 in the embodiment of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiment of the disclosure. The network device provided by the embodiment of the disclosure may be composed of a central unit (CU) and a distributed unit (DU). The CU may also be called control unit. The use of CU-DU structure allows to divide a protocol layer of the network device, such as a base station, such that some of the protocol layer functions are placed in the CU for centralized control, and some or all of the remaining protocol layer functions are distributed in the DU, and the DU is centrally controlled by the CU.

The terminal 12 in the embodiment of the disclosure is an entity on a user side for receiving or transmitting signals, such as a cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiment of the disclosure.

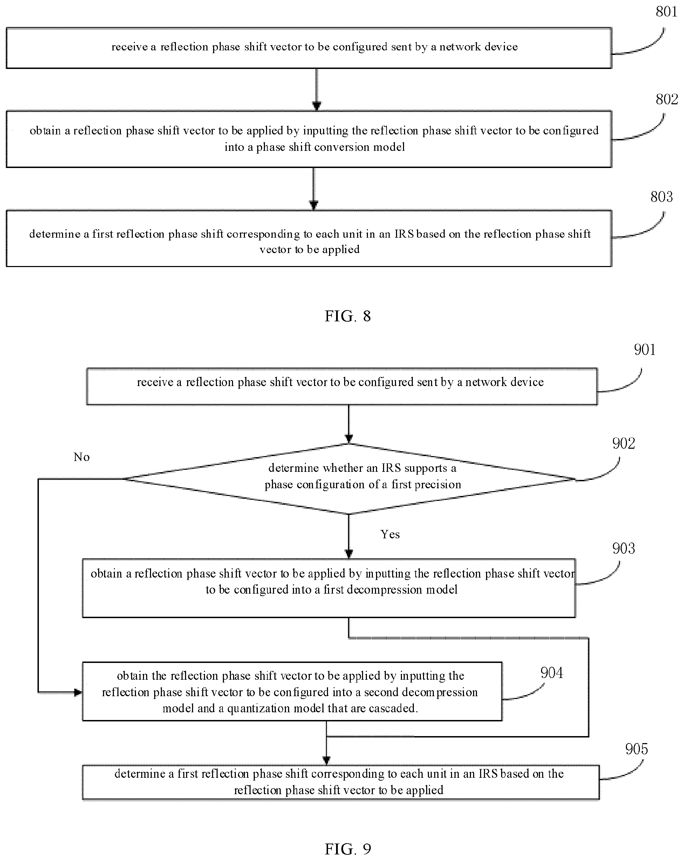

In this system, the network device may implement the method shown in any embodiment of FIG. 2 to FIG. 7 in the disclosure, and the IRS may implement the method shown in any embodiment of FIG. 8 to FIG. 10 in the disclosure.

It is understandable that the communication system described in the embodiment of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

To realize beamforming in an IRS-assisted communication system, the network device needs to estimate channel state information (CSI), calculate, according to an estimation value of the CSI, an appropriate beamforming matrix when the network device sends the beam and a phase shift when the IRS reflects the beam, and then configure the calculated IRS phase shift to the IRS.

Due to the process of designing the beamforming for the network device being before the IRS phase shift configuration, the affect caused by an overhead of the IRS phase shift configuration will cause a spectrum efficiency loss. The disclosure provides a method for sending a phase shift configuration of an IRS and a method for receiving a phase shift configuration of an IRS. The overhead of the IRS phase shift configuration is considered in the process of designing the beamforming. Meanwhile, the phase configuration overhead may be adaptively adjusted according to a channel statistical characteristic, to reduce system and rate performance losses caused by the phase configuration overhead to the greatest extent.

As illustrated in FIG. 2, FIG. 2 is a flowchart of a method for sending a phase shift configuration of an IRS provided by an embodiment of the disclosure. The method is performed by a network device. As illustrated in FIG. 2, the method includes but is not limited to the following steps.

At step 201, a pilot signal sent by a terminal is received.

In a beamforming design process, each terminal needs to send a pilot signal to the network device, so that the network device may determine a beamforming matrix and an IRS phase shift corresponding to each of the terminals according to the corresponding pilot signal. That is, in this disclosure, the network device may receive the pilot signal sent by one or more terminals, and then calculate the beamforming matrix and IRS phase shift corresponding to each terminal.

At step 202, a decorrelation processing is performed on the pilot signal.

Optionally, the network device may perform the decorrelation processing on the received pilot signal by using a characteristic of channels between terminals communicating with the network device at the same time being orthogonal to each other.

At step 203, an initial reflection phase shift vector is obtained by inputting a decorrelated pilot signal into a first network model.

The first network model is a model trained by the network device based on training data, and configured to generate the reflection phase shift vector of the IRS according to the input decorrelated pilot signal.

Optionally, when the network device performs the decorrelation processing on the received pilot signals, the network device may performs the decorrelation processing on the currently received pilot signals according to a number of terminals, that are supposed to communicate with the network device at the same time when decorrelating the pilot signal, in the training data corresponding to the first network model.

For example, when the network device decorates the pilot signal sent by the terminal in 3 directions when preparing the training data corresponding to the first network model, that is, when the network device assumes that the network device may communicate with 3 terminals at the same time through the IRS, when the network device performs a beamforming design based on the first network model, the network device may also decorrelate the received pilot signal sent by the terminal in 3 directions.

With reference to the above example, after receiving the pilot signal sent by the terminal, the network device may divide the pilot signal into a plurality of subframes, and each subframe has 3 pilot symbols. After the network device decorrelates the received pilot signal, the decorrelated pilot signal obtained may be represented as:

$$\boldsymbol{y}_k(t) = \boldsymbol{F}_k \boldsymbol{q}(t) + \boldsymbol{n}(t)$$

where $\boldsymbol{y}_k(t)$ represents a component of a user k in a $t^{\text{th}}$ subframe after the decorrelation;

$\boldsymbol{F}_k = \left[\boldsymbol{h}_k^d, \boldsymbol{A}_k\right]$ represents a real end-to-end channel of a terminal k, where $\boldsymbol{h}_k^d$ represents a direct-link channel between the network device and the terminal k, $A_k = \boldsymbol{G}\,diag(\boldsymbol{h}_k^r)$ represents a reflection link cascade channel between the network device and the terminal k, $\boldsymbol{G}$ represents a channel between the network device and the IRS, $\boldsymbol{h}_k^r$ represents a channel between the IRS and the terminal k, and *diag* (•) represents a diagonal matrix with an input vector as a diagonal element; and

$\boldsymbol{q}(t) = [1, v(t)^T]^T$, where $(•)^T$ represents transposition, $\boldsymbol{v}(t)$ represents a reflection phase shift vector of IRS in the $t^{\text{th}}$ subframe, and $\boldsymbol{n}(t)$ represents a noise component of the $t^{\text{th}}$ subframe after decorrelation.

Optionally, the first network model may output a beamforming matrix after processing the decorrelated pilot signal, and then when the network device performs downlink data transmission, the network device may process the downlink data based on the beamforming matrix to obtain processed downlink data, and send the processed downlink data to the terminal.

At step 204, a reflection phase shift vector to be configured is obtained by inputting the initial reflection phase shift vector into a second network model, in which a scale of the reflection phase shift vector to be configured is smaller than a scale of the initial reflection phase shift vector.

The second network model is a model obtained by joint training of the network device when training the first network model, and the second network model is configured to compress the scale of the initial reflection phase shift vector output by the first network model.

Optionally, the second network model may be configured to compress the scale of the initial reflection phase shift vector to obtain the reflection phase shift vector to be configured with a smaller scale.

At step 205, the reflection phase shift vector to be configured is sent to the IRS.

In the disclosure, after determining the reflection phase shift vector to be configured, the network device sends the reflection phase shift vector to be configured to the IRS, so that the IRS may reflect and transmit signals based on the reflection phase shift vector to be configured.

After the network device processes the decorrelated pilot signal using the first network model to obtain the initial reflection phase shift vector, the network device processes the initial network reflection phase shift vector using the second network model to obtain the reflection phase shift vector to be configured with a smaller scale and sends the reflection phase shift vector to be configured to the IRS. Due to the smaller scale of the reflection phase shift vector to be configured, an overhead and a rate performance loss of the network device in configuring the reflection phase shift vector to the IRS are reduced.

In the disclosure, after receiving the pilot signal sent by the terminal, the network device performs the decorrelation processing on the pilot signal and inputs the decorrelated pilot signal into the first network model to obtain the initial reflection phase shift vector, and then inputs the initial reflection phase shift vector into the second network model to obtain the reflection phase shift vector to be configured with a smaller scale, and sends the reflection phase shift vector to be configured to the IRS. Therefore, by reducing the scale of the reflection phase shift vector to be configured, the overhead and the rate performance loss of the network device configuring the reflection phase shift vector to the IRS are reduced.

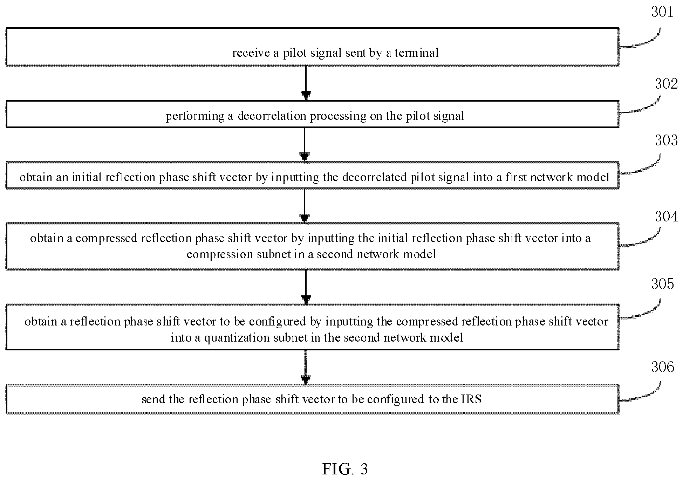

As illustrated in FIG. 3, FIG. 3 is a flowchart of a method for sending a phase shift configuration of an IRS provided by an embodiment of the disclosure. The method is performed by a network device. As illustrated in FIG. 3, the method includes but is not limited to the following steps.

At step 301, a pilot signal sent by a terminal is received.

At step 302, a decorrelation processing is performed on the pilot signal.

At step 303, an initial reflection phase shift vector is obtained by inputting a decorrelated pilot signal into a first network model.

The specific implementations of the above steps 301 to 303 may be referred to the detailed description of any embodiment of the disclosure, and will not be repeated herein.

At step 304, a compressed reflection phase shift vector is obtained by inputting the initial reflection phase shift vector into a compression sub-network in a second network model.

Optionally, the compression sub-network may be any network that is able to compress vectors.

For example, the compression sub-network may be composed of a convolution layer, a straightening layer and a fully-connected layer that are cascaded, in which the number of convolution layers, straightening layers or fully-connected layers may be adjusted as required.

Optionally, a number of neurons of the fully-connected layer may be set according to an expected number of output elements after compression. For example, when the size of the initial reflection phase shift vector output by the first network model is $100 \times 2 \times 1$, and the number of neurons of the fully-connected layer is set to 50, a scale of the compressed reflection phase shift vector obtained by the compression sub-network is reduced to a half.

At step 305, a reflection phase shift vector to be configured is obtained by inputting the compressed reflection phase shift vector into a quantization sub-network in the second network model.

In order to further reduce an information amount fed back to the IRS by the network device, the second network model may also include a quantization sub-network for quantizing the compressed phase shift vector, in order to convert a floating-point vector into a bit-form vector. That is, the reflection phase shift vector to be configured obtained is a vector of a bit-tree value, which may further reduce a configuration loss of the reflection phase shift vector.

Optionally, a quantization function may be selected as required, for example, a quantization sub-network designed by a Tanh function may be adopted. A quantization function is represented by:

$$Q_1(v_q) = \tanh(c_1 v_q)$$

A quantizer $Q_1$ is configured to perform a quantization calculation based on the Tanh function for each element in the vector $v_q$. $c_1$ is a quantization parameter, and the larger the value of $c_1$ is, the closer $Q_1$ is to a real quantizer. However, when $c_1$ is too large, it will affect a model performance.

At step 306, the reflection phase shift vector to be configured is sent to the IRS.

The specific implementation process of the above step 306 may be referred to the detailed description of any embodiment of the disclosure, and will not be repeated here.

In the disclosure, after receiving the pilot signal sent by the terminal, the network device performs the decorrelation processing on the pilot signal and inputs the decorrelated pilot signal into the first network model to obtain the initial reflection phase shift vector. Afterwards, the network device perform the compression processing and the quantization processing on the initial reflection phase shift vector to obtain the reflection phase shift vector to be configured with a smaller scale, and sends the reflection phase shift vector to be configured to the IRS. Therefore, by compressing the scale of the reflection phase shift vector to be configured, the overhead and the rate performance loss of the network device configuring the reflection phase shift vector to the IRS are reduced.

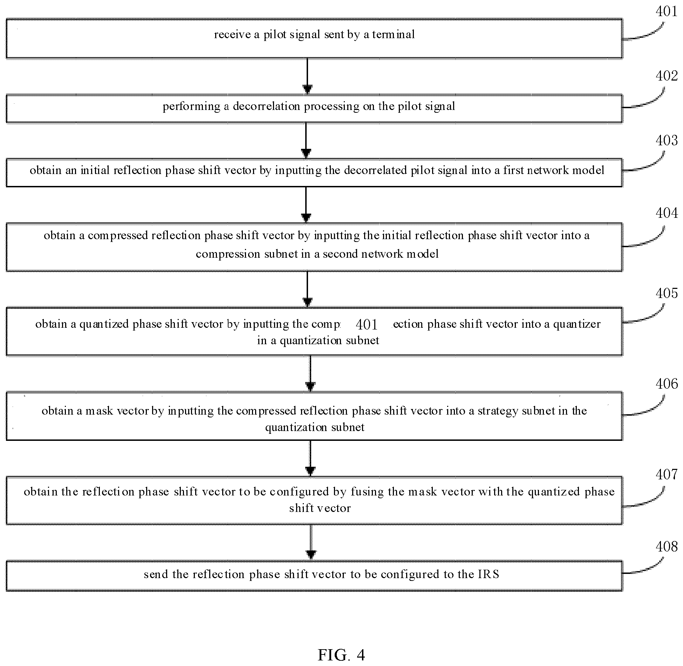

As illustrated in FIG. 4, FIG. 4 is a flowchart of a method for sending a phase shift configuration of an IRS provided by an embodiment of the disclosure. The method is performed by a network device. As illustrated in FIG. 4, the method includes but is not limited to the following steps.

At step 401, a pilot signal sent by a terminal is received.

At step 402, a decorrelation processing is performed on the pilot signal.

At step 403, an initial reflection phase shift vector is obtained by inputting a decorrelated pilot signal into a first network model.

At step 404, a compressed reflection phase shift vector is obtained by inputting the initial reflection phase shift vector into a compression sub-network in a second network model.

At step 405, a quantized phase shift vector is obtained by inputting the compressed reflection phase shift vector into a quantizer in a quantization sub-network.

The specific implementations of the above steps 401 to 405 may be referred to the detailed description of any embodiment of the disclosure, and will not be repeated herein.

At step 406, a mask vector is obtained by inputting the compressed reflection phase shift vector into a strategy sub-network in the quantization sub-network.

Optionally, for different channel states, the corresponding reflection phase shift amounts on the IRS may be different. For example, when the channel state is good, only a few elements in the IRS need to process data to be reflected or transmitted based on a corresponding phase shift angle. When the channel state is poor, all the elements in the IRS need to process the data to be reflected or transmitted based on the corresponding phase shift angle. The pilot signal sent by the terminal may reflect a channel state. In the disclosure, the compressed reflection phase shift vector may be input into the strategy sub-network, so that the strategy sub-network may determine the current channel state based on the compressed reflection phase shift vector. Based on the current channel state, the scale of the reflection phase shift vector to be configured may be determined, so as to output the corresponding mask vector.

In the disclosure, the strategy sub-network may be implemented in any form of network structure, which is not limited by this disclosure.

For example, the strategy sub-network may include one fully-connected layer, a Softmax layer, a Gumbel Softmax layer, and a layer that implements an operation of converting a one-hot code to a mask. A number of neurons included in the fully-connected layer of the strategy sub-network needs to be the same as a number of neurons included in the last fully-connected layer of the compression sub-network. An input of the strategy sub-network is the compressed reflection phase shift vector in step 404, an output of the Softmax layer is represented by $\boldsymbol{p}$, and an output of the Gumbel Softmax layer is represented by $\tilde{\boldsymbol{p}}$, so the output of the Gumbel Softmax layer is:

$$\tilde{p}_i = \frac{exp\big((\ln p_i + g_i)/\tau\big)}{\sum_{j=1}^{d} exp\big((\ln p_j + g_j)/\tau\big)}, i = 1, \cdots, d$$

where $g_i$ obeys a standard Gumbel distribution, $g_i = -ln(-ln\ u_i)$, and $u_i$ obeys an uniform distribution between $(0, 1)$. $\tau$ is a parameter that controls a discreteness of $\tilde{\boldsymbol{p}}$. When $\tau$ tends to infinity, $\tilde{\boldsymbol{p}}$ tends to obey the uniform distribution. When $\tau$ tends to 0, $\tilde{\boldsymbol{p}}$ tends to be the one-hot code. Therefore, in this embodiment, $\tau$ may be a number close to 0, such as 0.005, and the one-hot code $\tilde{\boldsymbol{p}}$ is converted into a mask $\boldsymbol{m}$. For example, $m_i = \sum_{j=i}^{d} \tilde{p}_i, i = 1, \cdots, d$.

At step 407, a reflection phase shift vector to be configured is obtained by fusing the mask vector with the quantized phase shift vector.

Optionally, the network device may perform the Hadmard product calculation on the mask vector and the quantized phase shift vector to obtain the reflection phase shift vector to be configured.

At step 408, the reflection phase shift vector to be configured is sent to the IRS.

The specific implementation of the above step 408 may be referred to the detailed description of any embodiment of the disclosure, and will not be repeated herein.

In the disclosure, after receiving the pilot signal sent by the terminal, the network device performs the decorrelation processing on the pilot signal and inputs the decorrelated pilot signal into the first network model to obtain the initial reflection phase shift vector. Afterwards, the network device perform the compression processing and the quantization processing on the initial reflection phase shift vector, while the network device determines the mask vector using the strategy sub-network based on the current channel state, and then obtains, based on the mask vector and the quantized vector, the reflection phase shift vector to be configured with a smaller scale and suitable for the current channel state. Then the network device sends the reflection phase shift vector to be configured to the IRS. By adaptively compressing the scale of the reflection phase shift vector to be configured, it may be ensured that the configured reflection phase shift vector is suitable for the current channel state, and the overhead and the rate performance loss of the network device in configuring the reflection phase shift vector to the IRS are reduced.

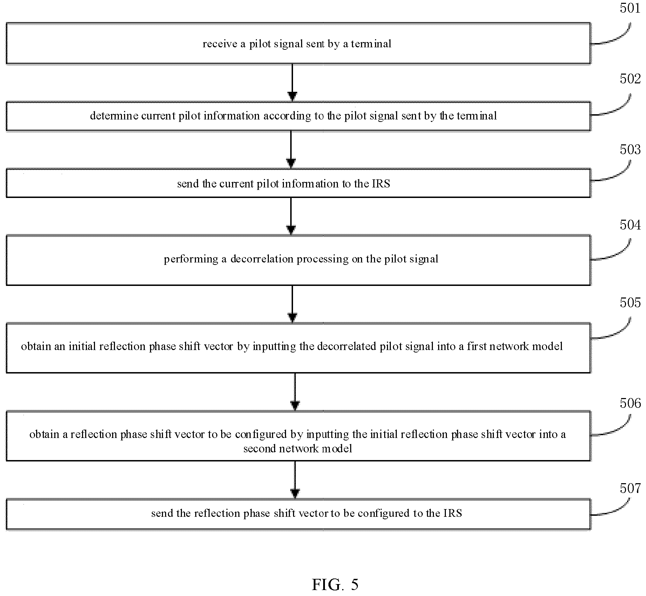

As illustrated in FIG. 5, FIG. 5 is a flowchart of a method for sending a phase shift configuration of an IRS provided by an embodiment of the disclosure. The method is performed by a network device. As illustrated in FIG. 5, the method includes but is not limited to the following steps.

At step 501, a pilot signal sent by a terminal is received.

The specific implementation of the above step 501 may be referred to the detailed description of any embodiment of the disclosure, and will not be repeated herein.

At step 502, current pilot information is determined according to the pilot signal sent by the terminal.

The pilot information includes a number of subframes contained in the pilot signal and a number of pilot symbols contained in each subframe.

For example, when the first network model and the second network model are generated by training based on an assumption that 3 terminals communicate with the network device at the same time, after receiving the pilot signal sent by the terminals, the network device may decorrelate the pilot signal according to there being three pilot symbols contained in each subframe, so as to determine the number of subframes contained in the pilot signal.

At step 503, the current pilot information is sent to the IRS.

In the disclosure, in order to assist the IRS in determining an applicable reflection phase shift in the uplink transmission process, after receiving the pilot signal sent by the terminal, the network device first determines the pilot information based on the pilot signal and sends the pilot information to the IRS, so that the IRS may configure an uplink reflection phase based on the pilot information.

Optionally, in order to further reduce the transmission overhead between the network device and the IRS, the network device may send the current pilot information to the IRS only when the current pilot information is different from historical pilot information. Therefore, when the IRS receives new pilot information, the IRS will configure an uplink reflection phase shift based on the newly received pilot information, otherwise the IRS may continue to reflect and transmit uplink data based on the previous uplink reflection phase shift.

At step 504, a decorrelation processing is performed on the pilot signal.

At step 505, an initial reflection phase shift vector is obtained by inputting a decorrelated pilot signal into a first network model.

At step 506, a reflection phase shift vector to be configured is obtained by inputting the initial reflection phase shift vector into a second network model.

It should be noted that steps 502 and 503 may be executed synchronously with steps 504 to 506. That is, the network device may synchronously performing the decorrelation processing on the pilot signal when determining and sending the pilot information to the IRS, which is not limited in this disclosure.

At step 507, the reflection phase shift vector to be configured is sent to the IRS.

The specific implementations of the above steps 504-507 may be referred to the detailed description of any embodiment of the disclosure, and will not be repeated herein.

In the disclosure, after receiving the pilot signal sent by the terminal, the network device determines the pilot information according to the pilot signal and sends the pilot information to the IRS. Meanwhile, the network device performs the decorrelation processing on the pilot signal and inputs the decorrelated pilot signal into the first network model to obtain the initial reflection phase shift vector, and inputs the initial reflection phase shift vector into the second network model to obtain the reflection phase shift vector to be configured with a smaller scale, and then sends the reflection phase shift vector to be configured to the IRS. By compressing the scale of the reflection phase shift vector to be configured, the overhead and the rate performance loss of the network device configuring the reflection phase shift vector to the IRS are reduced.

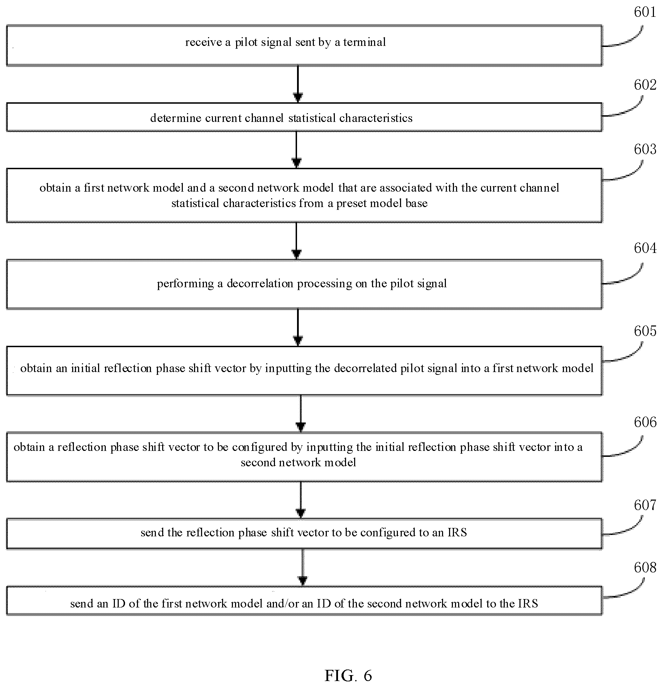

As illustrated in FIG. 6, FIG. 6 is a flowchart of a method for sending a phase shift configuration of an IRS provided by an embodiment of the disclosure. The method is performed by a network device. As illustrated in FIG. 6, the method includes but is not limited to the following steps.

At step 601, a pilot signal sent by a terminal is received.

The specific implementation of the above step 601 may be referred to the detailed description of any embodiment of the disclosure, and will not be repeated herein.

At step 602, a current channel statistical characteristic is determined.

Optionally, because the pilot signal sent by the terminal may reflect a current channel state, the network device may determine the current channel statistical characteristic by analyzing the pilot signal sent by the terminal.

At step 603, a first network model and a second network model associated with the current channel statistical characteristic are obtained from a preset model base.

Because the channel statistical characteristics corresponding to different pilot signals in training data are different, model parameters of the first network model and the second network model generated by training may also be different. Therefore, in this disclosure, the network device associates the channel statistical characteristics corresponding to the pilot signals in the training data with the first network model and the second network model generated by training. Therefore, when calculating the reflection phase shift, the corresponding available first network model and second network model are obtained according to the current channel statistical characteristic.

At step 604, a decorrelation processing is performed on the pilot signal.

Step 604 and step 603 may be executed simultaneously, or step 604 may be executed before step 603, which is not limited by this disclosure.

At step 605, an initial reflection phase shift vector is obtained by inputting a decorrelated pilot signal into the first network model.

At step 606, a reflection phase shift vector to be configured is obtained by inputting the initial reflection phase shift vector into the second network model.

At step 607, the reflection phase shift vector to be configured is sent to an IRS.

The specific implementations of the above steps 604-607 may be referred to the detailed description of any embodiment of the disclosure, and will not be repeated herein.

At step 608, an identifier (ID) of the first network model and/or an ID of the second network model are sent to the IRS.

Step 608 may be executed before step 607 and after step 603, or step 608 and step 607 may be executed simultaneously, which is not limited by this disclosure.

Because the reflection phase shift vector to be configured sent to the IRS by the network device is a compressed phase shift vector, the IRS needs to decompress the received reflection phase shift vector to be configured before configuring the reflection phase shift. That is, the IRS needs to know a mode of the network device compressing the reflection phase shift vector to be configured. The network device may thus send the ID of the currently used first network model and/or the ID of the second network model to the IRS, so that the IRS may determine what processing that have been performed on the reflection phase shift vector to be configured by the network device, based on the ID of the first network model and/or the ID of the second network model.

Optionally, in order to reduce the transmission between the network device and the IRS, the network device may send the ID of the first network model and/or the ID of the second network model to the IRS only when the current channel statistical characteristic being different from historical channel statistical characteristics. Therefore, when the IRS does not receive the ID of the first network model and/or the ID of the second network model, it is considered that the first network model and the second network model currently adopted by the network device are the same as those adopted in the history, so that the received reflection phase shift vector to be configured may be converted by using a historical phase shift conversion model.

In the disclosure, after receiving the pilot signal sent by the terminal, the network device determines the current channel statistical characteristic according to the pilot signal and determines the first network model and the second network model to be used based on the current channel statistical characteristic. Meanwhile, the network device performs the decorrelation processing the pilot signal and inputs the decorrelated pilot signal into the first network model to obtain the initial reflection phase shift vector, and inputs the initial reflection phase shift vector into the second network model to obtain the reflection phase shift vector to be configured with a smaller scale, and then sends the reflection phase shift vector to be configured to the IRS. By compressing the scale of the reflection phase shift vector to be configured, the overhead and the rate performance loss of the network device configuring the reflection phase shift vector to the IRS are reduced.

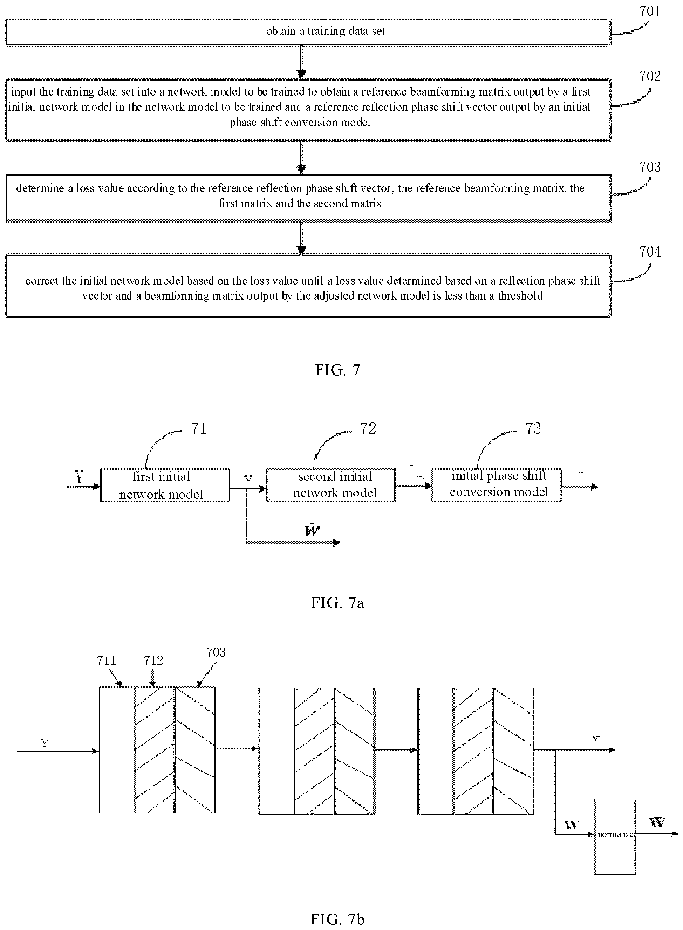

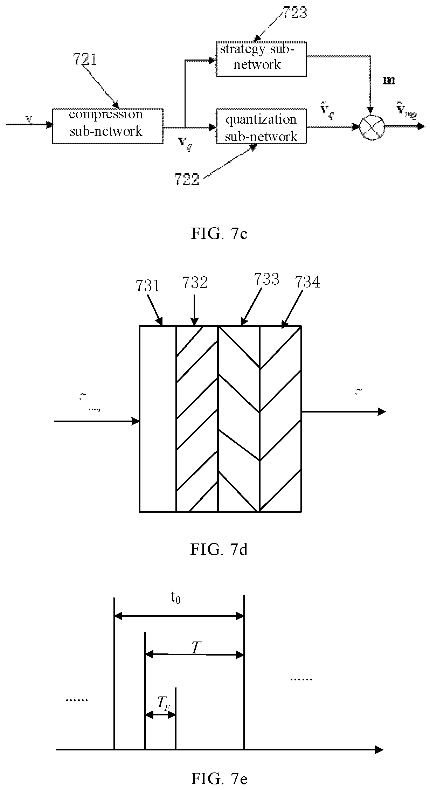

As illustrated in FIG. 7, FIG. 7 is a flowchart of a training method for a model for determining a reflection phase shift to be configured according to an embodiment of the disclosure. The method is performed by a network device. As illustrated in FIG. 7, the method includes but is not limited to the following steps.

At step 701, a training data set is obtained.

The training data set includes decorrelated pilot signals corresponding to a plurality of terminals respectively, a first matrix corresponding to a direct-link channel between each terminal and the network device, and a second matrix corresponding to a reflection link cascade channel between each terminal and the network device.

Optionally, the network device may first determine a possible scenarios in which the network device communicates with the terminal via the IRS. For example, it is assumed that the network device may communicate with 3 terminals with the assistance of the IRS, a total time slot of the pilot signal sent by the terminal to the network device is L, the network device may divide the pilot signal into x subframes, and each subframe contains 3 pilot symbols. The pilot symbols of all the terminals are designed to be orthogonal to each other. By using an orthogonality of a pilot sequence between the terminals, a decorrelation processing is performed on the received pilot signal to obtain:

$$y_k(t) = F_k q(t) + n(t)$$

where $y_k(t)$ represents a component of a terminal k in a $t^{th}$ subframe after the decorrelation, $F_k = \left[ h_k^d, A_k \right]$ represents a real end-to-end channel of the terminal k, where $h_k^d$ represents a first matrix corresponding to a direct-link channel between the network device and the terminal k, $A_k = G \, diag(h_k^r)$ represents a second matrix corresponding to a reflection link cascade channel between the network device and the terminal k, **G** represents a channel between the network device and the IRS, $h_k^r$ represents a channel between the IRS and the terminal k, and *diag* (•) represents a diagonal matrix with an input vector as a diagonal elements; and $q(t) = [1, v(t)^T]^T$, where $(•)^T$ represents transposition, $v(t)$ represents a reflection phase shift vector of IRS in the $t^{th}$ subframe, and $n(t)$ represents a noise component of the $t^{th}$ subframe after decorrelation.

Because the pilot signal of the terminal is divided into x subframes, the training data set determined by the pilot signal sent by each terminal may be represented by:

$$Y_k = F_k Q + N$$

where $Y_k = [y_k(1), \cdots, y_k(x)]$, $Q = [q(1), \cdots, q(x)]$, $N = [n(1), \cdots, n(x)]$, where $Y_k$ represents a training data set needed to train a neural network. Considering that there are 3 terminals, an input of the neural network should be $Y = [Y_1, Y_2, Y_3]$.

At step 702, the training data set is input into a network model to be trained to obtain a reference beamforming matrix output by a first initial network model in the network model to be trained and a reference reflection phase shift vector output by an initial phase shift conversion model.

The network to be trained includes the first initial network model, a second initial network model and the initial phase shift conversion model that are cascaded.

A schematic diagram of a network model provided by this disclosure may be illustrated by FIG. 7a. As illustrated in FIG. 7a, the network model includes a first initial network model 71, a second initial network model 72 and an initial phase shift conversion model 73.

The input of the first initial network model 71 is a training data set Y, and the output of the first initial network model 71 is a beamforming matrix $\overline{W}$ and an initial reflection phase shift vector V. The initial reflection phase shift vector V is input to the second initial network model 72, and the second initial network model 72 outputs a reflection phase shift vector to be configured $\tilde{v}_{mq}$. After inputting the reflection phase shift vector to be configured $\tilde{v}_{mq}$ to the initial phase shift conversion model 73, the initial phase shift conversion model 73 may output a reference reflection phase shift vector $\tilde{v}$ applicable to the IRS.

The first initial network model 71, the second initial network model 72 and the initial phase shift conversion model 73 may all be realized by any network structure. Functions of the first initial network model 71, the second initial network model 72, and the initial phase shift conversion model 73 will be further explained respectively by taking a network structure shown in FIG. 7b as an example.

FIG. 7b is a schematic diagram of the first initial network model 71.

As illustrated in FIG. 7b, the first initial network model 71 is composed of three groups of fully-connected layers 711, activation function layers 712 and batch standardization layers 713. Each fully-connected layer 711 may include 300 neurons as a hidden layer, and an activation function may be ReLu. In addition, due to a limitation of downlink transmission power, a beamforming matrix $W$ may be normalized to $\overline{W}$ at an output end, and $\overline{W} = \sqrt{P}W/\|W\|_F$, where $\|•\|_F$ represents a matrix Frobenius norm, and $P$ is a downlink transmit power.

As illustrated in FIG. 7c, the second initial network model 72 may include a compression sub-network 721, a quantization sub-network 722, and a strategy sub-network 723.

The compression sub-network 721 is composed of one convolution layer, one straightening layer and one fully-connected layer. The form of convolution kernel used in the convolution layer may be designed as required. For example, 3 convolution kernels with a size of $2 \times 2$ are selected. A number of neurons in the fully-connected layer is a number of output elements after compression. For example, in this embodiment, the number of neurons in the fully-connected layer is set to 50. The compressed reflection phase shift vector output by the fully-connected layer is $v_q$. In order to further reduce an amount of information fed back to the IRS by the network device and ensure the rate performance, the quantization sub-network 722 designed with the Tanh function may be added after the fully-connected layer. For example, a quantization function may be:

$$Q_1(v_q) = \tanh(c_1 v_q)$$

The quantization sub-network 722 performs a quantization calculation based on the Tanh function for each element in a vector $v_q$, and outputs a quantized vector $\tilde{v}_q$. The larger $c_1$ is, the closer $Q_1$ is to a real quantizer, but when $c_1$ is too large, it will affect a training result. In the disclosure, $c_1 = 10$ may be set.

In addition, the strategy sub-network 723 may be composed of one fully-connected layer (for example, including 50 neurons), a Softmax layer, a Gumbel Softmax layer, and a layer that implements an operation of converting a one-hot code to a mask. An input of the strategy sub-network 723 is the compressed reflection phase shift vector $v_q$ output by the compression sub-network 721, an output of Softmax layer is represented by $p$, and an output of the Gumbel Softmax layer

is represented by $\tilde{p}$, so the output of the Gumbel Softmax layer is:

$$\tilde{p}_i = \frac{exp\big((\ln p_i + g_i)/\tau\big)}{\sum_{j=1}^{d} exp\big((\ln p_j + g_j)/\tau\big)}, i = 1, \cdots, d$$

where $g_i$ obeys a standard Gumbel distribution, $g_i = -\ln(-\ln u_i)$, and $u_i$ obeys an uniform distribution between (0, 1). $\tau$ is a parameter that controls a discreteness of $\tilde{p}$. When $\tau$ tends to infinity, $\tilde{p}$ tends to obey the uniform distribution. When $\tau$ tends to 0, $\tilde{p}$ tends to be the one-hot code. Therefore, in this embodiment, $\tau$ may be a number close to 0, such as 0.005, and the one-hot code $\tilde{p}$ is converted into a mask $m$. For example, $m_i = \sum_{j=i}^{d} \tilde{p}_i, i = 1, \cdots, d$.

Afterwards, the Hadamard product calculation is performed for $\tilde{v}_q$ and the mask m to obtain the reflection phase shift vector to be configured $\tilde{v}_{mq}$, that is, $\tilde{v}_{mq} = \tilde{v}_q \odot m$.

As illustrated in FIG. 7d, the phase shift conversion model 73 may be composed of one fully-connected layer 731, one convolution layer 732, one straightening layer 733 and another fully-connected layer 734. The fully-connected layer 734 is configured to output a reflection phase shift vector to be applied $\tilde{v}$. A number of neurons included in the two fully-connected layers may be the same or different. For example, the two fully-connected layers may both include 200 neurons, and the convolution layer uses 3 convolution kernels with a size of 2×2.

Optionally, when the IRS supports a low-precision phase configuration, a quantization sub-network $Q_2$ (not shown in the figure) may be added after the above network. An input of the quantizer is a real-imaginary part of a decompressed IRS reflection phase shift. For the IRS reflection phase shift $v = e^{j\theta}$, a phase angle $\theta \in 0,2\pi)$ is obtained and a quantized phase angle is:

$$Q_2(\boldsymbol{\theta}) = \sum_{i=1}^{D} a_i\big[\tanh\big(c_2(\boldsymbol{\theta} - b_i)\big) + 1\big]$$

where, $B = 2^b$, $b$ represents a number of quantization bits. $a_i = \frac{\pi}{2^b}$. The bigger $c_2$ is, the closer $Q_2$ is to a real quantizer, but when $c_2$ is too large, it will affect the training effect. In the disclosure, for example, $c_2 = 10$ is selected. $b_i$ represents a quantization threshold. The quantization sub-network $Q_2$ performs a quantization calculation based on tanh function for each element in the vector $\theta$. Then, the quantized IRS phase shift $Q_2(\theta)$ is converted into the real-imaginary part by using trigonometric functions $cos(\cdot)$ and $sin(\cdot)$. The calculation with the trigonometric functions here is also performed for each element in $Q_2(\theta)$.

In addition, an output of the last fully-connected neural network layer in the initial phase shift conversion model 73 is a real part and an imaginary part of the IRS reflection phase shift. In order to reduce a scale of the neural network at the IRS, the disclosure may further simplify the IRS reflection phase shift. For example, the real-imaginary part of the reflection phase shift angle output by the neural network is changed to an IRS reflection phase shift angle output by the neural network, so that the number of neurons in the second fully-connected layer is adjusted from 200 to 100. Considering a periodicity of trigonometric function, the disclosure may first convert it into the real-imaginary part by using trigonometric functions $cos(\cdot)$ and $sin(\cdot)$, and then use the real-imaginary part to calculate the angle value within the range of $0,2\pi)$.

At step 703, a loss value is determined according to the reference reflection phase shift vector, the reference beamforming matrix, the first matrix and the second matrix.

In the disclosure, an Adam optimizer and an end-to-end training mode are adopted to minimize a cost function to train the model to be trained. The downlink data transmission stage includes a stage in which the network device sends feedback data to the IRS and a stage in which the network device sends data to the terminal.

As illustrated in FIG. 7e, FIG. 7e is a schematic diagram of a transmission time slot of an IRS-assisted communication system. A duration of one communication process between the network device and the terminal is t0, which includes a pilot transmission stage, a stage in which the network device sends feedback data to the IRS and a stage in which the network device sends data to the terminal. A total duration of the last two stages is represented by T, a duration of sending the feedback data from the network device to the IRS is represented by $T_F$, and a amount of feedback data is $B_F = \sum_{i=1}^{d} m_i$, then a desired optimized system rate may be represented as:

$$\tilde{R} = \Big(1 - \frac{T_F}{T}\Big)\sum_{k=1}^{K} R_k = \Big(1 - \frac{B_F}{R_F T}\Big)\sum_{k=1}^{K} R_k.$$

where $R_F$ represents a data transmission rate of a feedback link, and $R_k$ represents a rate of a terminal k, and the specific expression is:

$$R_k = log_2 \left( 1 + \frac{|\gamma_k|^2}{\sum_{i=1,i\neq k}^{K}|\gamma_i|^2 + \sigma_0^2} \right)$$

where:

$$\gamma_i = \begin{bmatrix} \Re\{\bar{w}_i^T\} & -\Im\{\bar{w}_i^T\} \\ \Im\{\bar{w}_i^T\} & \Re\{\bar{w}_i^T\} \end{bmatrix} \cdot \left( \begin{bmatrix} \Re\{h_k^d\} \\ \Im\{h_k^d\} \end{bmatrix} + \begin{bmatrix} \Re\{A_k\} & -\Im\{A_k\} \\ \Im\{A_k\} & \Re\{A_k\} \end{bmatrix} \begin{bmatrix} \Re\{\tilde{v}\} \\ \Im\{\tilde{v}\} \end{bmatrix} \right)$$

where |•| represents modulo, $\Re\{\cdot\}$ and $\Im\{\cdot\}$ represent a real part and an imaginary part respectively, $\bar{w}_i$ represents a normalized reference beamforming matrix of a $i^{th}$ terminal, $\tilde{v}$ represents a reference reflection phase shift vector, and $\sigma_0^2$ represents a downlink noise power.

A loss function that may be adopted by the disclosure is:

$$L = -E[\tilde{R}]$$

where $E[\cdot]$ means to calculate an expectation.

After determining the reference reflection phase shift vector, the reference beamforming matrix, the first matrix and the second matrix, the network device calculates the value of the above loss function.

At step 704, the initial network model is corrected based on the loss value until a loss value determined based on a reflection phase shift vector and a beamforming matrix output by the adjusted network model is less than a threshold.

The corrected network model includes the first network model, the second network model and the phase shift conversion model that are cascaded.

In the disclosure, after calculating the loss value, the network device may determine a correction gradient of each layer in the network based on the loss value, and then correct a weight and a offset of each layer in the initial phase shift conversion model, the second initial network model and the first initial network model until the loss value determined based on the reflection phase shift vector and the beamforming matrix output by the corrected network model is less than the threshold, and then it may be determined that the model training is completed.

Optionally, the network device in this disclosure may send the phase shift conversion network model and the ID of the associated model to the IRS, in which the ID of the associated model includes the ID of the first network model and/or the ID of the second network model.

In the disclosure, because the phase shift conversion model is a model used by the IRS to decompress the received reflection phase shift to be configured which is configured by the network device, the network device needs to send the phase shift conversion model generated by training to the IRS after the model training is completed. In addition, since the phase shift conversion model is jointly trained with the first network model and the second network model, the network device also needs to send the ID of the first network model and/or the ID of the second network model to the IRS. Therefore, the IRS may store the ID of the phase shift conversion network model and the ID of the associated model, and then select the phase shift conversion model to be used in the reflection phase shift configuration process according to the obtained reflection phase shift vector to be configured, and the ID of the first network model and/or the ID of the second network model which are used at during the generation of the reflection phase shift vector to be configured. Then the IRS uses the selected phase shift conversion model to configure the received reflection phase shift vector to be configured.

Optionally, the training process of the model may be performed by a server. After the server performs the above-mentioned process, the corrected network model is obtained. The server sends the first network model and the second network model in the generated network model to the network device, and sends the phase shift network model and the ID of the associated model to the IRS, which is not limited in the disclosure.

As illustrated in FIG. 8, FIG. 8 is a flowchart of a method for receiving a phase shift configuration of an IRS provided by an embodiment of the disclosure. The method is performed by an IRS. As illustrated in FIG. 8, the method includes but is not limited to the following steps.

At step 801, a reflection phase shift vector to be configured sent by a network device is received.

In the disclosure, the reflection phase shift vector to be configured received by the IRS is obtained after the network device processes the pilot signal sent by the terminal by using the first network model and the second network model generated by training. The specific determination process of the reflection phase shift vector to be configured may refer to the detailed description of any embodiment of the disclosure, and will not be repeated here.

At step 802, a reflection phase shift vector to be applied is obtained by inputting the reflection phase shift vector to be configured into a phase shift conversion model.

A scale of the reflection phase shift vector to be applied is larger than a scale of the reflection phase shift vector to be configured.

Since the reflection phase shift vector to be configured sent by the network device is a vector with a compressed scale, the IRS needs to decompress the reflection phase shift vector to be configured before an application. Therefore, the IRS inputs the reflection phase shift vector to be configured into the phase shift conversion model to perform a decompression processing on the reflection phase shift vector to be configured, in order to obtain the reflection phase shift vector to be applied.

Optionally, the phase shift conversion model may be realized by using any network structure, such as the network structure shown in FIGS. 7b-7c, which is not limited by this disclosure.

In addition, the phase shift conversion model may be trained and generated by the network device and then configured to the IRS, or the phase shift conversion model may be trained and generated by a servicer and then configured inside the IRS, which is not limited in this disclosure.

At step 803, a first reflection phase shift corresponding to each unit in the IRS is determined based on the reflection phase shift vector to be applied.

After the IRS determines the reflection phase shift vector to be applied, the IRS may determine the reflection phase shift corresponding to each IRS unit according to an arrangement information of units in the IRS, and then reflects or transmits downlink data based on the first reflection phase shift corresponding to each unit during downlink transmission.

In the disclosure, after receiving the reflection phase shift vector to be configured sent by the network device, the IRS may use the phase shift conversion model to convert the reflection phase shift vector to be configured to the reflection phase shift vector to be applied with a larger scale, and then determine the first reflection phase shift corresponding to each unit according to the reflection phase shift vector to be applied. In this way, the network device may configure the reflection phase shift vector with a smaller scale to the IRS, which reduces the overhead and the rate performance loss of the network device configuring the reflection phase shift vector to the IRS.

As illustrated in FIG. 9, FIG. 9 is a flowchart of a method for receiving a phase shift configuration of an IRS provided by an embodiment of the disclosure. The method is performed by an IRS. As illustrated in FIG. 9, the method includes but is not limited to the following steps.

At step 901, a reflection phase shift vector to be configured sent by a network device is received.

At step 902, it is determined whether the IRS supports a phase configuration of a first precision, when the IRS supports the phase configuration of the first precision, step 903 is executed, otherwise, step 904 is executed.

The first precision is higher than a second precision.

A phase precision supported by the IRS is configured to represent a precision of a phase that may be configured by the IRS unit, for example, the IRS supports 4 digits after the decimal point, or only supports integer digits, and so on.

At step 903, a reflection phase shift vector to be applied is obtained by inputting the reflection phase shift vector to be configured into a first decompression model.

At step 904, a reflection phase shift vector to be applied is obtained by inputting the reflection phase shift vector to be configured into a second decompression model and a quantization model that are cascaded.

That is, when the phase precision supported by the IRS is high, a decompressed vector of the received reflection phase shift vector to be configured may be directly determined as the reflection phase shift vector to be applied. However, when the phase precision supported by the IRS is low, it is necessary to quantize the decompressed vector of the received reflection phase shift vector to be configured, to obtain the reflection phase shift vector to be applied.

The structure and implementation principle of the first decompression model, the second decompression model and the quantization model may refer to the detailed description of any embodiment of the disclosure, and will not be repeated here.

Optionally, in order to further reduce a scale of the phase shift conversion model on the IRS side, the last fully-connected layer of the second decompression model in the phase shift conversion model may output a specific phase shift angle rather than an imaginary-real part corresponding to each phase shift angle, so that a scale of the last fully-connected layer may be reduced to a half.

That is, in the disclosure, the IRS may input the reflection phase shift vector to be configured into the second decompression model, and obtains the phase shift angle value corresponding to each element in the reflection phase shift vector to be configured output by the second decompression model. Then, the IRS inputs the phase shift angle into the quantization model to obtain a quantized phase shift angle, and then determines the reflection phase shift vector to be applied according to the quantized phase shift angle.

That is, the IRS first determines and output the specific reflection phase shift angle according to the imaginary-real part of the reflection phase shift angle, then quantifies the reflection phase shift angle, and determines the imaginary-real part of the reflection phase shift angle to be applied according to the quantized reflection phase shift angle through the calculation with trigonometric functions.

At step 905, a first reflection phase shift corresponding to each unit in an IRS is determined based on the reflection phase shift vector to be applied.

In the disclosure, after receiving the reflection phase shift vector to be configured sent by the network device, the IRS may convert the reflection phase shift vector to be configured to the reflection phase shift vector to be applied with a larger scale using the corresponding phase shift conversion model according to the phase shift precision supported by the IRS, and then determine the reflection phase shift corresponding to each unit according to the reflection phase shift vector to be applied. In this way, the network device may configure the reflection phase shift vector with a smaller scale to the IRS, which reduces the overhead and the rate performance loss of the network device in configuring the reflection phase shift vector to the IRS.

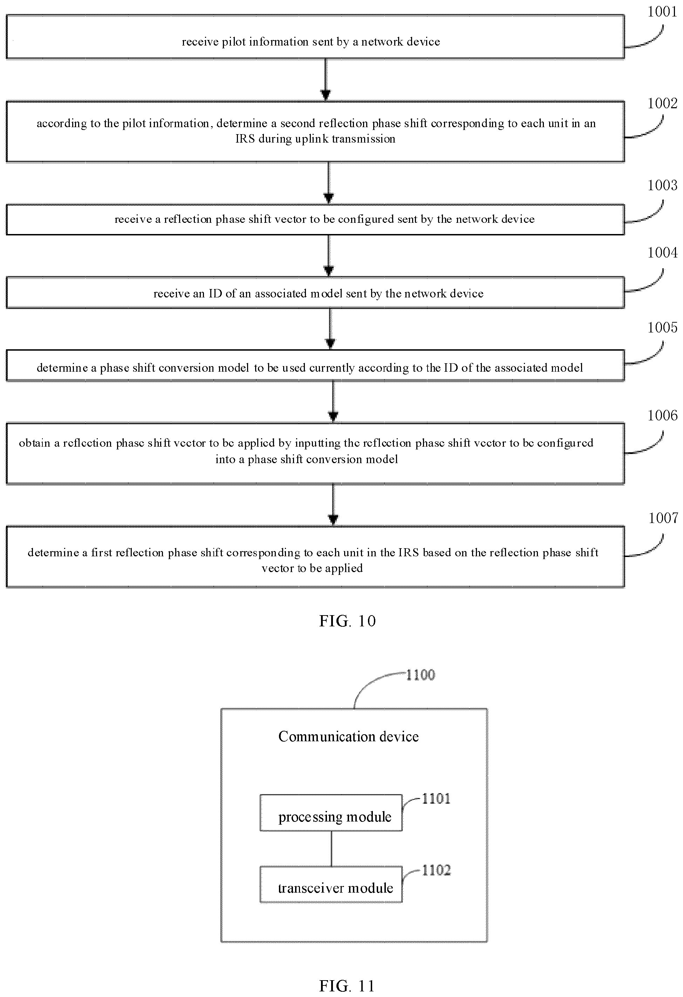

As illustrated in FIG. 10, FIG. 10 is a flowchart of a method for receiving a phase shift configuration of an IRS provided by an embodiment of the disclosure. The method is performed by an IRS. As illustrated in FIG. 10, the method includes but is not limited to the following steps.

At step 1001, pilot information sent by a network device is received.

The pilot information includes a number of subframes contained in the pilot signal and a number of pilot symbols contained in each subframe, and the pilot information is determined by the network device according to a received pilot signal sent by the terminal.

For example, when the phase shift conversion model is generated base on an assumption that 3 terminals communicate with the network device at the same time, after receiving the pilot signal sent by the terminal, the network device may perform a decorrelation processing on the pilot signal according to there being three pilot symbols contained in each subframe, so as to determine the number of subframes contained in the pilot signal.

At step 1002, according to the pilot information, a second reflection phase shift corresponding to each unit in the IRS during uplink transmission is determined.

In the disclosure, in order to assist the IRS in determining the applicable reflection phase shift during uplink transmission, after receiving the pilot signal sent by the terminal, the network device first determines the pilot information based on the pilot signal and sends the pilot information to the IRS, so that the IRS may configure an uplink reflection phase shift based on the pilot information.

Optionally, in order to further reduce the transmission overhead between the network device and the IRS, the network device may also send the current pilot information to the IRS only when the current pilot information is different from historical pilot information. Therefore, when the IRS receives new pilot information, the IRS configures the uplink reflection phase shift based on the newly received pilot information, otherwise the IRS may continue to reflect and transmit uplink data based on the previous uplink reflection phase shift.

At step 1003, a reflection phase shift vector to be configured sent by the network device is received.

At step 1004, an ID of an associated model sent by the network device is received.

The associated model is a model used by the network device to generate the reflection phase shift vector to be configured. The ID of the associated model may be the ID of the first network model and/or the ID of the second network model. The relationship between the first network model and the second network model with the phase shift conversion model may refer to the detailed description of any embodiment of the disclosure, which is not repeated here.

Optionally, in this disclosure, step 1003 and step 1004 may be executed in parallel. That is, the network device sends the reflection phase shift vector to be configured and the ID of the associated model to the IRS through one message. Alternatively, step 1004 may be executed before step 1003, which is not limited by this disclosure.

At step 1005, a phase shift conversion model to be used currently is determined according to the ID of the associated model.

Because the reflection phase shift vector to be configured sent to the IRS by the network device is a compressed phase shift vector, the IRS needs to decompress the received reflection phase shift vector to be configured before configuring the reflection phase shift. That is, the IRS needs to know a mode of the network device compressing the reflection phase shift vector to be configured. The network device may thus send the ID of the currently used first network model and/or the ID of the second network model to the IRS, so that the IRS may determine what processing that have been performed on the reflection phase shift vector to be configured by the network device based on the ID of the first network model and/or the ID of the second network model.

Optionally, in order to reduce the transmission between the network device and the IRS, the network device may send the ID of the first network model and/or the ID of the second network model to the IRS only when the current channel statistical characteristic is different from the historical channel statistical characteristic. Therefore, when the IRS does not receive the ID of the first network model and/or the ID of the second network model, it is considered that the first network model and the second network model currently adopted by the network device are the same as those adopted in the history, so that the received reflection phase shift vector to be configured may be converted by using a historical phase shift conversion model.

Optionally, the IRS receives the decompression network model and the ID of the associated model sent by the network device in advance, and stores the decompression network model and the ID of the associated model in an association manner. Therefore, when configuring the reflection phase shift, after receiving the ID of the associated model sent by the network device, the phase shift conversion model to be used currently may be determined according to the stored corresponding relationship.

At step 1006, a reflection phase shift vector to be applied is obtained by inputting the reflection phase shift vector to be configured into a phase shift conversion model.

At step 1007, a first reflection phase shift corresponding to each unit in the IRS is determined based on the reflection phase shift vector to be applied.

In the disclosure, when receiving the pilot information sent by the network device, the IRS determines the second reflection phase shift corresponding to each unit during uplink transmission based on the pilot information. After receiving the reflection phase shift vector to be configured and the ID of the associated model sent by the network device, the IRS may determine the phase shift conversion model to be used according to the ID of the associated model. Afterwards, the IRS converts the reflection phase shift vector to be configured into the reflection phase shift vector to be applied with a larger scale by using the phase shift conversion model to be used currently, and then determines the reflection phase shift corresponding to each unit according to the reflection phase shift vector to be applied. Therefore, it achieves that the network device may configure the reflection phase shift vector with a smaller scale to the IRS, and the overhead and rate performance loss of the network device configuring the reflection phase shift vector to the IRS may be reduced.

FIG. 11 is a schematic diagram of a communication apparatus provided by an embodiment of the disclosure. The communication apparatus 1100 shown in FIG. 11 may include a processing module 1101 and a transceiver module 1102. The transceiver module 1102 may include a sending module and/or a receiving module. The sending module is configured for realizing a sending function, and the receiving module is configured for realizing a receiving function. The transceiver module 1102 may realize the sending function and/or the receiving function.

It is understood that the communication apparatus 1100 may be a network device, an apparatus in the network device, or an apparatus that is able to be used together with the network device.

When the communication apparatus 1100 is on a network device side,

a transceiver module 1102, configured to receive a pilot signal sent by a terminal; and
a processing module 1101, configured to perform a decorrelation processing on the pilot signal;
the processing module 1101 is further configured to obtain an initial reflection phase shift vector by inputting a decorrelated pilot signal into a first network model; and
the processing module 1101 is further configured to obtain a reflection phase shift vector to be configured by inputting the initial reflection phase shift vector into a second network model, in which a scale of the reflection phase shift vector to be configured is smaller than a scale of the initial reflection phase shift vector; and
the transceiver module 1102 is further configured to send the reflection phase shift vector to be configured to the IRS.

Optionally, the processing module 1101 is further configured to:

obtain a compressed reflection phase shift vector by inputting the initial reflection phase shift vector into a compression sub-network in the second network model; and
obtain the reflection phase shift vector to be configured by inputting the compressed reflection phase shift vector into a quantization sub-network in the second network model.

Optionally, the processing module 1101 is further configured to:

obtain a quantized phase shift vector by inputting the compressed reflection phase shift vector into a quantizer in the quantization sub-network;
obtain a mask vector by inputting the compressed reflection phase shift vector into a strategy sub-network in the quantization sub-network; and
obtain the reflection phase shift vector to be configured by fusing the mask vector with the quantized phase shift vector.

Optionally, the processing module 1101 is further configured to:
determining current pilot information according to the pilot signal sent by the terminal, in which the pilot information includes a number of subframes contained in the pilot signal and a number of pilot symbols contained in each subframe.

The transceiver module 1102 is further configured to send the current pilot information to the IRS.

Optionally, the transceiver module 1102 is further configured to: send the current pilot information to the IRS, where the current pilot information is different from historical pilot information.

Optionally, the processing module 1101 is further configured to:

determine a current channel statistical characteristic; and

obtain, from a preset model base, the first network model and the second network model which are associated with the current channel statistical characteristic.

Optionally, the transceiver module 1102 is further configured to:

send an ID of the first network model and/or an ID of the second network model to the IRS.

Optionally, the transceiver module 1102 is further configured to:

send an ID of the first network model and/or an ID of the second network model to the IRS, where the current channel statistical characteristic is different from historical channel statistical characteristics.

Optionally, the processing module 1101 is further configured to:

obtain a training data set, in which the training data set includes the decorrelated pilot signals corresponding to a plurality of terminals respectively, a first matrix corresponding to a direct-link channel between each terminal and the network device, and a second matrix corresponding to a reflection link cascade channel between each terminal and the network device;

input the training data set into a network model to be trained to obtain a reference beamforming matrix output by a first initial network model in a network model to be trained and a reference reflection phase shift vector output by an initial phase shift conversion model, in which the network model to be trained includes the first initial network model, a second initial network model and the initial phase shift conversion model that are cascaded;

determine a loss value according to the reference reflection phase shift vector, the reference beamforming matrix, the first matrix and the second matrix; and

correct the initial network model based on the loss value until a loss value determined based on a reflection phase shift vector and a beamforming matrix output by a corrected network model is less than a threshold, in which the adjusted network model includes the first network model, the second network model and a phase shift conversion model that are cascaded.

Optionally, the transceiver module 1102 is further configured to:

send the phase shift conversion model and an ID of an associated model to the IRS, in which the ID of the associated model includes the ID of the first network model and/or the ID of the second network model.

In the disclosure, after receiving the pilot signal sent by the terminal, the network device decorrelates the pilot signal and inputs the decorrelated pilot signal into the first network model to obtain the initial reflection phase shift vector, and then inputs the initial reflection phase shift vector into the second network model to obtain the reflection phase shift vector to be configured with a smaller scale and sends the reflection phase shift vector to be configured to the IRS. Therefore, by reducing the scale of the reflection phase shift vector to be configured, the overhead and rate performance loss of the network device configures the reflection phase shift vector to the IRS are reduced.

It is understood that the communication apparatus 1100 may be an IRS, an apparatus in the IRS, and an apparatus that can be used together with the IRS.

When the communication apparatus 1100 is on a IRS side,

the transceiver module 1102 is configured to receive a reflection phase shift vector to be configured sent by a network device;

the processing module 1101 is further configured to: obtain a reflection phase shift vector to be applied by inputting the reflection phase shift vector to be configured into a phase shift conversion model, in which a scale of the reflection phase shift vector to be applied is larger than a scale of the reflection phase shift vector to be configured; and

the processing module 1101 is further configured to: determine a first reflection phase shift corresponding to each unit in the IRS based on the reflection phase shift vector to be applied.

Optionally, the processing module 1101 is further configured to:

obtain the reflection phase shift vector to be applied by inputting the reflection phase shift vector to be configured into a first decompression model, where the IRS supports a phase configuration of a first precision; or,

obtain the reflection phase shift vector to be applied by inputting the reflection phase shift vector to be configured into a second decompression model and a quantization model that are cascaded, where the IRS supports a phase configuration of a second precision;

in which the first precision is higher than the second precision.

Optionally, the processing module 1101 is further configured to:

input the reflection phase shift vector to be configured into the second decompression model, and obtain a phase shift angle corresponding to each element in the reflection phase shift vector to be configured output by the second decompression model by inputting the reflection phase shift vector to be configured into the second decompression model;

obtain a quantized phase shift angle by inputting the phase shift angle into the quantization model; and

determine the reflection phase shift vector to be applied according to the quantized phase shift angle.

Optionally, the transceiver module 1102 is further configured to:
receive pilot information sent by the network device.

The processing module 1101 is further configured to: determine, according to the pilot information, a second reflection phase shift corresponding to each unit in the IRS during uplink transmission.

Optionally, the transceiver module 1102 is further configured to: receive an ID of an associated model sent by the network device, in which the associated model is a model used by the network device to generate the reflection phase shift vector to be configured.

The processing module 1101 is further configured to: determine a phase shift conversion model to be used currently according to the ID of the associated model.

Optionally, the transceiver module 1102 is further configured to: receive the phase shift conversion model and the ID of the associated model sent by the network device.

The processing module 1101 is further configured to: store the phase shift conversion model and the ID of the associated model in an association manner.

In the disclosure, after receiving the reflection phase shift vector to be configured sent by the network device, the IRS may use the phase shift conversion model to convert the reflection phase shift vector to be configured to the reflection phase shift vector to be applied with a larger scale, and then determine the first reflection phase shift corresponding to each unit according to the reflection phase shift vector to be applied. In this way, the network device may configure a smaller reflection phase shift vector to the IRS, and the overhead and rate performance loss of the network device configuring the reflection phase shift vector to the IRS are reduced.

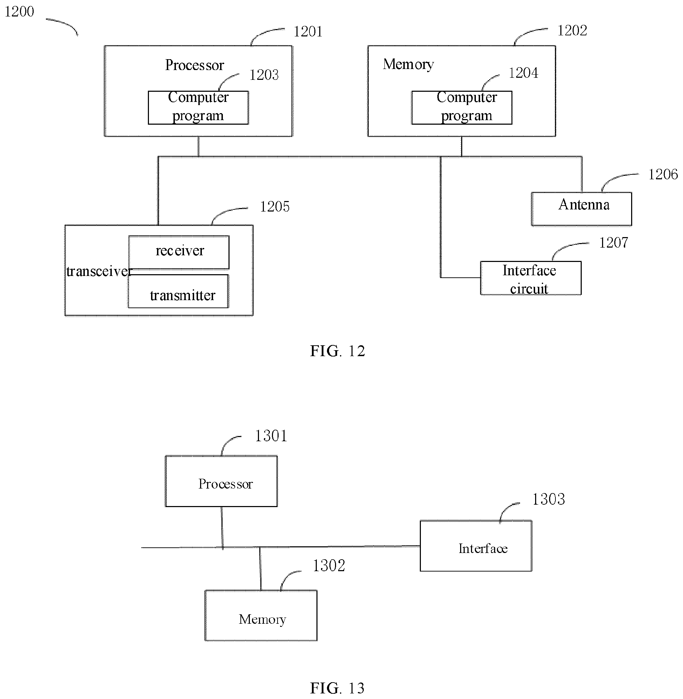

FIG. 12 is a schematic diagram of another communication apparatus 1200 provided by an embodiment of the disclosure. The communication apparatus 1200 may be a network device, an IRS, a chip, a chip system, or a processor that supports the network device to realize the above-mentioned methods, or a chip, a chip system, or a processor that supports the IRS to realize the above-mentioned methods. The apparatus is configured to implement the methods described in the above method embodiments, and details may be referred to the descriptions in the above method embodiments.

The communication apparatus 1200 may include one or more processors 1201. The processor 1201 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, CU or DU), executing computer programs, and processing data of the computer programs.

Optionally, the communication apparatus 1200 may include one or more memories 1202 on which computer programs 1204 may be stored. The processor 1201 executes the computer programs 1204 to cause the communication apparatus 1200 to perform the methods described in the above method embodiments. Optionally, data may also be stored in the memory 1202. The communication apparatus 1200 and the memory 1202 may be provided separately or may be integrated together.

Optionally, the communication apparatus 1200 may also include a transceiver 1205 and an antenna 1206. The transceiver 1205 may be referred to as transceiver unit, transceiver machine, or transceiver circuit, for realizing the transceiver function. The transceiver 1205 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1200 may also include one or more interface circuits 1207. The interface circuits 1207 are used to receive code instructions and transmit them to the processor 1201. The processor 1201 runs the code instructions to cause the communication apparatus 1200 to perform the methods described in the method embodiments.

When the communication apparatus 1200 is a network device, the processor 1201 is configured to execute steps 202, 203 and 204 in FIG. 2, and steps 302, 303 and 304 in FIG. 3, and the transceiver 1205 is configured to execute steps 201 and 205 in FIG. 2, or steps 301 and 306 in FIG. 3, etc.

When the communication apparatus 1200 is an IRS, the transceiver 1205 is configured to perform step 801 in FIG. 8, or step 901 in FIG. 9, etc., and the processor 1201 is configured to perform steps 802 and 803 in FIG. 8, etc.

In an implementation, the processor 1201 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1201 may store a computer program 1203, which runs on the processor 1201 and may cause the communication apparatus 1200 to perform the methods described in the method embodiments above. The computer program 1203 may be solidified in the processor 1201, in which case the processor 1201 may be implemented by hardware.

In an implementation, the communication apparatus 1200 may include circuits. The circuits may implement the sending, receiving or communicating function in the preceding method embodiments. The processors and transceivers described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a terminal or an intelligent relay, but the scope of the communication apparatus described in the disclosure is not limited thereto, and the structure of the communication apparatus may not be limited by FIG. 12. The communication apparatus may be a stand-alone device or may be part of a larger device. For example, the communication apparatus may be:

(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication apparatus may be a chip or a chip system is described with reference to the schematic structure of the chip shown in FIG. 13. As illustrated in FIG. 13, the chip includes a processor 1301 and an interface 1303. There may be one or more processors 1301 and a plurality of interfaces 1303.

In the case where the chip is used to implement the functions of the terminal in the embodiments of the disclosure, the interface 1303 is used to perform steps 201 and 205 in FIG. 2.

In the case where the chip is used to implement the functions of the IRS in the embodiments of the disclosure, the interface 1303 is used to perform step 801 in FIG. 8.

Optionally, the chip further includes a memory 1302 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

### Claims

1. A method for sending a phase shift configuration of an intelligent reflecting surface (IRS), performed by a network device, comprising:

   receiving a pilot signal sent by a terminal;
   performing a decorrelation processing on the pilot signal;
   obtaining an initial reflection phase shift vector by inputting a decorrelated pilot signal into a first network model;
   obtaining a reflection phase shift vector to be configured by inputting the initial reflection phase shift vector into a second network model, wherein a scale of the reflection phase shift vector to be configured is smaller than a scale of the initial reflection phase shift vector; and
   sending the reflection phase shift vector to be configured to the IRS.

2. The method of claim 1, wherein obtaining the reflection phase shift vector to be configured by inputting the initial reflection phase shift vector into the second network model, comprises:

   obtaining a compressed reflection phase shift vector by inputting the initial reflection phase shift vector into a compression sub-network in the second network model; and
   obtaining the reflection phase shift vector to be configured by inputting the compressed reflection phase shift vector into a quantization sub-network in the second network model.

3. The method of claim 2, wherein inputting the compressed reflection phase shift vector into the quantization sub-network in the second network model, comprises:

obtaining a quantized phase shift vector by inputting the compressed reflection phase shift vector into a quantizer in the quantization sub-network;

obtaining a mask vector by inputting the compressed reflection phase shift vector into a strategy sub-network in the quantization sub-network; and

obtaining the reflection phase shift vector to be configured by fusing the mask vector with the quantized phase shift vector.

4. The method of claim 1, further comprising:

determining current pilot information according to the pilot signal sent by the terminal, wherein the pilot information comprises a number of subframes contained in the pilot signal and a number of pilot symbols contained in each subframe; and

sending the current pilot information to the IRS.

5. The method of claim 4, wherein sending the current pilot information to the IRS, comprises:

sending the current pilot information to the IRS, wherein the current pilot information is different from historical pilot information.

6. The method of claim 1, further comprising:

determining a current channel statistical characteristic; and

obtaining, from a preset model base, the first network model and the second network model which are associated with the current channel statistical characteristic.

7. The method of claim 6, further comprising:

sending an identifier (ID) of the first network model and/or an ID of the second network model to the IRS.

8. The method of claim 7, wherein the current channel statistical characteristic is different from historical channel statistical characteristics.

9. The method of any one of claims 1-8, further comprising:

obtaining a training data set, wherein the training data set comprises the decorrelated pilot signals corresponding to a plurality of terminals respectively, a first matrix corresponding to a direct-link channel between each terminal and the network device, and a second matrix corresponding to a reflection link cascade channel between each terminal and the network device;

inputting the training data set into a network model to be trained to obtain a reference beamforming matrix output by a first initial network model in the network model to be trained and a reference reflection phase shift vector output by an initial phase shift conversion model, wherein the network model to be trained comprises the first initial network model, a second initial network model and the initial phase shift conversion model that are cascaded;

determining a loss value according to the reference reflection phase shift vector, the reference beamforming matrix, the first matrix and the second matrix; and

correcting the initial network model based on the loss value until a loss value determined based on a reflection phase shift vector and a beamforming matrix output by a corrected network model is less than a threshold, wherein the corrected network model comprises the first network model, the second network model and a phase shift conversion model that are cascaded.

10. The method of claim 9, further comprising:

sending the phase shift conversion model and an ID of an associated model to the IRS, wherein the ID of the associated model comprises the ID of the first network model and/or the ID of the second network model.

11. A method for receiving a phase shift configuration of an intelligent reflecting surface (IRS), performed by the IRS, comprising:

receiving a reflection phase shift vector to be configured sent by a network device;

obtaining a reflection phase shift vector to be applied by inputting the reflection phase shift vector to be configured into a phase shift conversion model, wherein a scale of the reflection phase shift vector to be applied is larger a scale of the reflection phase shift vector to be configured; and
determining a first reflection phase shift corresponding to each unit in the IRS based on the reflection phase shift vector to be applied.

12. The method of claim 11, wherein obtaining the reflection phase shift vector to be applied by inputting the reflection phase shift vector to be configured into the phase shift conversion model, comprises:

obtaining the reflection phase shift vector to be applied by inputting the reflection phase shift vector to be configured into a first decompression model, wherein the IRS supports a phase configuration of a first precision; or,
obtaining the reflection phase shift vector to be applied by inputting the reflection phase shift vector to be configured into a second decompression model and a quantization model that are cascaded, wherein the IRS supports a phase configuration of a second precision;
wherein the first precision is higher than the second precision.

13. The method of claim 12, wherein obtaining the reflection phase shift vector to be applied by inputting the reflection phase shift vector to be configured into the second decompression model and the quantization model that are cascaded, comprises:

inputting the reflection phase shift vector to be configured into the second decompression model, and obtaining a phase shift angle value corresponding to each element in the reflection phase shift vector to be configured output by the second decompression model;
obtaining a quantized phase shift angle by inputting the phase shift angle value into the quantization model; and
determining the reflection phase shift vector to be applied according to the quantized phase shift angle.

14. The method of claim 11, further comprising:

receiving pilot information sent by the network device; and
determining, according to the pilot information, a second reflection phase shift corresponding to each unit in the IRS during uplink transmission.

15. The method of claim 11, further comprising:

receiving an identifier (ID) of an associated model sent by the network device, wherein the associated model is a model used by the network device to generate the reflection phase shift vector to be configured; and
determining a phase shift conversion model to be used currently according to the ID of the associated model.

16. The method of claim 15, further comprising:

receiving the phase shift conversion model and the ID of the associated model sent by the network device; and
storing the phase shift conversion model and the ID of the associated model in an association manner.

17. A network device, comprising:

a transceiver module, configured to receive a pilot signal sent by a terminal; and
a processing module, configured to perform a decorrelation processing on the pilot signal;
wherein the processing module is further configured to obtain an initial reflection phase shift vector by inputting a decorrelated pilot signal into a first network model; and
wherein the processing module is further configured to obtain a reflection phase shift vector to be configured by inputting the initial reflection phase shift vector into a second network model, wherein a scale of the reflection phase shift vector to be configured is smaller than a scale of the initial reflection phase shift vector; and
wherein the transceiver module is further configured to send the reflection phase shift vector to be configured to the IRS.

18. An intelligent reflecting surface (IRS), comprising:

a transceiver module, configured to receive a reflection phase shift vector to be configured sent by a network device; and

a processing module, configured to obtain a reflection phase shift vector to be applied by inputting the reflection phase shift vector to be configured into a phase shift conversion model, wherein a scale of the reflection phase shift vector to be applied is larger than a scale of the reflection phase shift vector to be configured; wherein the processing module is further configured to determine a first reflection phase shift corresponding to each unit in the IRS based on the reflection phase shift vector to be applied.

19. A communication apparatus, comprising a processor and a memory having computer programs stored therein, wherein when the processor executes the computer programs stored in the memory, the apparatus is caused to implement the method according to any one of claims 1-10 or the method according to any one of claims 11-16.

20. A communication system, comprising a network device and an intelligent reflecting surface (IRS), wherein the network device is configured to execute the method according to any one of claims 1-10, and the IRS is configured to execute the method according to any one of claims 11-16.

21. A computer-readable storage medium for storing instructions, wherein when the instructions are executed, the method according to any one of claims 1-10 or the method according to any one of claims 11-16 is implemented.

IRS 13

Network device 11

Terminal 12

FIG. 1

receive a pilot signal sent by a terminal — 201

performing a decorrelation processing on the pilot signal — 202

obtain an initial reflection phase shift vector by inputting the decorrelated pilot signal into a first network model — 203

obtain a reflection phase shift vector to be configured by inputting the initial reflection phase shift vector into a second network model, in which a scale of the reflection phase shift vector to be configured is smaller than a scale of the initial reflection phase shift vector — 204

send the reflection phase shift vector to be configured to the IRS — 205

FIG. 2

301

receive a pilot signal sent by a terminal

302

performing a decorrelation processing on the pilot signal

303

obtain an initial reflection phase shift vector by inputting the decorrelated pilot signal into a first network model

304

obtain a compressed reflection phase shift vector by inputting the initial reflection phase shift vector into a compression subnet in a second network model

305

obtain a reflection phase shift vector to be configured by inputting the compressed reflection phase shift vector into a quantization subnet in the second network model

306

send the reflection phase shift vector to be configured to the IRS

FIG. 3

receive a pilot signal sent by a terminal — 401

performing a decorrelation processing on the pilot signal — 402

obtain an initial reflection phase shift vector by inputting the decorrelated pilot signal into a first network model — 403

obtain a compressed reflection phase shift vector by inputting the initial reflection phase shift vector into a compression subnet in a second network model — 404

obtain a quantized phase shift vector by inputting the comp 401 ection phase shift vector into a quantizer in a quantization subnet — 405

obtain a mask vector by inputting the compressed reflection phase shift vector into a strategy subnet in the quantization subnet — 406

obtain the reflection phase shift vector to be configured by fusing the mask vector with the quantized phase shift vector — 407

send the reflection phase shift vector to be configured to the IRS — 408

FIG. 4

501

receive a pilot signal sent by a terminal

502

determine current pilot information according to the pilot signal sent by the terminal

503

send the current pilot information to the IRS

504

performing a decorrelation processing on the pilot signal

505

obtain an initial reflection phase shift vector by inputting the decorrelated pilot signal into a first network model

506

obtain a reflection phase shift vector to be configured by inputting the initial reflection phase shift vector into a second network model

507

send the reflection phase shift vector to be configured to the IRS

FIG. 5

receive a pilot signal sent by a terminal
<div align="right">601</div>

determine current channel statistical characteristics
<div align="right">602</div>

obtain a first network model and a second network model that are associated with the current channel statistical characteristics from a preset model base
<div align="right">603</div>

performing a decorrelation processing on the pilot signal
<div align="right">604</div>

obtain an initial reflection phase shift vector by inputting the decorrelated pilot signal into a first network model
<div align="right">605</div>

obtain a reflection phase shift vector to be configured by inputting the initial reflection phase shift vector into a second network model
<div align="right">606</div>

send the reflection phase shift vector to be configured to an IRS
<div align="right">607</div>

send an ID of the first network model and/or an ID of the second network model to the IRS
<div align="right">608</div>

FIG. 6

| obtain a training data set | 701 |

input the training data set into a network model to be trained to obtain a reference beamforming matrix output by a first initial network model in the network model to be trained and a reference reflection phase shift vector output by an initial phase shift conversion model — 702

determine a loss value according to the reference reflection phase shift vector, the reference beamforming matrix, the first matrix and the second matrix — 703

correct the initial network model based on the loss value until a loss value determined based on a reflection phase shift vector and a beamforming matrix output by the adjusted network model is less than a threshold — 704

FIG. 7

FIG. 7a

FIG. 7b

FIG. 7c

FIG. 7d

FIG. 7e

801

receive a reflection phase shift vector to be configured sent by a network device

802

obtain a reflection phase shift vector to be applied by inputting the reflection phase shift vector to be configured into a phase shift conversion model

803

determine a first reflection phase shift corresponding to each unit in an IRS based on the reflection phase shift vector to be applied

FIG. 8

901

receive a reflection phase shift vector to be configured sent by a network device

902

No

determine whether an IRS supports a phase configuration of a first precision

Yes

903

obtain a reflection phase shift vector to be applied by inputting the reflection phase shift vector to be configured into a first decompression model

obtain the reflection phase shift vector to be applied by inputting the reflection phase shift vector to be configured into a second decompression model and a quantization model that are cascaded.

904

905

determine a first reflection phase shift corresponding to each unit in an IRS based on the reflection phase shift vector to be applied

FIG. 9

receive pilot information sent by a network device 1001

according to the pilot information, determine a second reflection phase shift corresponding to each unit in an IRS during uplink transmission 1002

receive a reflection phase shift vector to be configured sent by the network device 1003

receive an ID of an associated model sent by the network device 1004

determine a phase shift conversion model to be used currently according to the ID of the associated model 1005

obtain a reflection phase shift vector to be applied by inputting the reflection phase shift vector to be configured into a phase shift conversion model 1006

determine a first reflection phase shift corresponding to each unit in the IRS based on the reflection phase shift vector to be applied 1007

FIG. 10

1100

Communication device

processing module 1101

transceiver module 1102

FIG. 11

1200

1201

Processor

1203

Computer
program

1202

Memory

1204

Computer
program

1206

Antenna

1205

transceiver

receiver

transmitter

1207

Interface
circuit

FIG. 12

1301

Processor

1303

Interface

1302

Memory

FIG. 13

## INTERNATIONAL SEARCH REPORT

| International application No. |
| --- |
| **PCT/CN2022/108414** |

**A.    CLASSIFICATION OF SUBJECT MATTER**

H04L27/00(2006.01)i

According to International Patent Classification (IPC) or to both national classification and IPC

**B.    FIELDS SEARCHED**

Minimum documentation searched (classification system followed by classification symbols)

IPC:  H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE; 3GPP: 智能反射面, 智能反射表面, 智能超表面, 可配置智能反射面, 可配置智能反射表面, 可配置超表面, 相移, 移相, 导频, 解相关, 模型, 压缩, 配置, 反馈, 开销, 规模, 降低, 减小, 转换, 变换, intelligent, reflect+, surface, reconfigur+, IRS, RIS, pilot, signal, phase, shift, conver+, transition+, transform, model, feedback, configur+, overhead, compress, reduc+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113225276 A (SOUTHEAST UNIVERSITY) 06 August 2021 (2021-08-06) description, paragraphs [0041]-[0076], and figures 1-3 | 1-21 |
| A | CN 113497649 A (UNIVERSITY OF SCIENCE AND TECHNOLOGY BEIJING) 12 October 2021 (2021-10-12) entire document | 1-21 |
| A | WO 2021207748 A2 (FUTUREWEI TECHNOLOGIES, INC.) 14 October 2021 (2021-10-14) entire document | 1-21 |
| A | WO 2022049112 A1 (VESTEL ELEKTRONIK SANAYI VE TICARET AS) 10 March 2022 (2022-03-10) entire document | 1-21 |

☐ Further documents are listed in the continuation of Box C.    ☑ See patent family annex.

| | |
| --- | --- |
| *      Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **23 March 2023** | **09 April 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/108414**

| Patent document cited in search report | | | Publication date (day/month/year) | Patent family member(s) | | | Publication date (day/month/year) |
|---|---|---|---|---|---|---|---|
| CN | 113225276 | A | 06 August 2021 | None | | | |
| CN | 113497649 | A | 12 October 2021 | None | | | |
| WO | 2021207748 | A2 | 14 October 2021 | WO | 2021207748 | A9 | 25 November 2021 |
| | | | | WO | 2021207748 | A3 | 30 December 2021 |
| WO | 2022049112 | A1 | 10 March 2022 | EP | 3962006 | A1 | 02 March 2022 |

Form PCT/ISA/210 (patent family annex) (July 2022)